# EUROPÄISCHE PATENTSCHRIFT

(11) **EP 3 259 667 B1**
(45) Veröffentlichungstag und Bekanntmachung des Hinweises auf die Patenterteilung: **01.04.2020**
(21) Anmeldenummer: 16706331.2
(22) Anmeldetag: 17.02.2016
(51) Int. Cl.: G06F 11/22, G06F 3/041, B25J 19/02, G06F 3/01

(54) **VERFAHREN UND ANORDNUNG ZUM ÜBERPRÜFEN EINER FLÄCHE**
METHOD AND ARRANGEMENT FOR CHECKING A SURFACE
PROCÉDÉ ET ENSEMBLE POUR TESTER UNE SURFACE

(30) Priorität: 17.02.2015 DE 102015102238
(43) Veröffentlichungstag der Anmeldung: 27.12.2017
(73) Patentinhaber: Battenberg Robotic GmbH & Co. KG, 35043 Marburg (DE)
(72) Erfinder: BATTENBERG, Günther, 35043 Marburg (DE)
(74) Vertreter: Stoffregen, Hans-Herbert
(86) Internationale Anmeldenummer: PCT/EP2016/053373
(87) Internationale Veröffentlichungsnummer: WO 2016/131876

(56) Entgegenhaltungen:
- US-A1- 2014 309 775
- HOWE R D ET AL: "Integrating Tactile Sensing with control for Dextrous Manipulation", 19900820; 19900820 - 19900822, Bd. 1, 20. August 1990 (1990-08-20), Seiten 369-374, XP010278375,
- JENNA L GRAHAM ET AL: "Development of a multi-modal haptic feedback system for dexterous robotic telemanipulation", SYSTEMS, MAN, AND CYBERNETICS (SMC), 2011 IEEE INTERNATIONAL CONFERENCE ON, IEEE, 9. Oktober 2011 (2011-10-09), Seiten 3548-3553, XP032000034, DOI: 10.1109/ICSMC.2011.6084219 ISBN: 978-1-4577-0652-3
- HOWE R D ET AL: "DYNAMIC TACTILE SENSING: PERCEPTION OF FINE SURFACE FEATURES WITH STRESS RATE SENSING", IEEE TRANSACTIONS ON ROBOTICS AND AUTOMATION, IEEE INC, NEW YORK, US, Bd. 9, Nr. 2, 1. April 1993 (1993-04-01), Seiten 140-151, XP000415170, ISSN: 1042-296X, DOI: 10.1109/70.238278

## Beschreibung

Die Erfindung bezieht sich auf ein Verfahren zum Überprüfen einer Funktionen auslösenden Fläche durch Druckbeaufschlagung von zumindest einem Teilbereich, vorzugsweise mehreren Teilbereichen der Fläche, insbesondere zur Überprüfung eines Touchscreens, wobei nach die Funktion auslösender Druckbeaufschlagung die Fläche bzw. der druckbeaufschlagte Teilbereich haptisch erfassbar reagiert. Auch nimmt die Erfindung Bezug auf eine Anordnung umfassend ein Handhabungsgerät, in dem Kräfte- und Momentensensoren integriert sind, ein erstes Tastelement, in dem ein erster Sensor integriert ist, und eine Auswerteeinheit zum Überprüfen einer Funktionen auslösenden Fläche durch Druckbeaufschlagung von zumindest einem Teilbereich, vorzugsweise mehreren Teilbereichen der Fläche, insbesondere zur Überprüfung eines Touchscreens.

In modernen, hochwertigen Personenkraftfahrzeugen werden zunehmend hochperformante Touchdisplays zur Bedienung der Fahrzeugelektronik sowie des Navigationssystems eingesetzt. Ähnlich dem Smartphone-Bereich kommen dabei aufgrund der besseren Bedienbarkeit inzwischen fast ausschließlich näherungsempfindliche, kapazitive Touchdisplays anstelle resistiver Touchdisplays zum Einsatz. Derartige Displays lassen sich über Einfinger- und Vielfingergesten steuern. Beispiele für Einfingergesten sind das Klicken, das Doppelklicken und das Verziehen von Elementen. Vielfingergesten kommen zum Einsatz, um Zoom-in-, Zoom-out-Bewegungen oder aber Dreh- und Scrollbewegungen auszuführen. Um dem Anwender ein zusätzliches Gefühl hoher Wertigkeit zu geben, werden die Multifunktions-Touchdisplays mit sogenannten Force-Feedback-Funktionen ausgestattet, die einen erfolgreichen Klick durch eine mechanische Vibration des Displays hinsichtlich seiner wirksamen Geste signalisieren. Auf diese Weise erhält der Anwender eine direkte mechanische Rückmeldung vom Display hinsichtlich seiner wirksamen Geste zur Steuerung.

Zur Funktionalitäts- und Qualitätsprüfung von Touchdisplays greift man auf geschultes Personal zurück, um Vielfingergesten sowie den haptischen Eindruck des Force-Feedback bei Ein- und Vielfingergesten manuell zu ermitteln. Für diese manuelle Prüfung stehen keine technischen Hilfsmittel zur Verfügung, so dass dies zu einer hohen Operatorabhängigkeit und einer mangelnden Reproduzierbarkeit der Prüfergebnisse führt. Im Automobilbereich ist eine solche mangelnde Reproduzierbarkeit von Prüfergebnissen und die damit einhergehenden Qualitätsschwankungen der ausgelieferten Kraftfahrzeugkomponenten dauerhaft nicht tolerierbar.

Die US 2012/0146956 A1 bezieht sich auf eine Touchscreen-Testanordnung, die einen Roboter mit einem Tastelement umfasst, der einen Finger nachbilden kann. Dabei kann das Touchscreen gleichzeitig mit zwei Tastern berührt werden, die relativ zueinander verstellbar sind.

Die US 2014/309775 A1 zeigt ein Verfahren zum Überprüfen einer Funktionen auslösenden Fläche durch Druckbeaufschlagung von zumindest einem Teilbereich, vorzugsweise von mehreren Teilbereichen der Fläche, insbesondere zur Überprüfung eines Touchscreens, wobei nach die Funktionen auslösender Druckbeaufschlagung die Fläche bzw. der druckbeaufschlagte Teilbereich haptisch erfassbar reagiert. Der zumindest eine Teilbereich wird von einem ersten Tastelement mittels eines Handhabungsgeräts mit integriertem Kraftsensor druckbeaufschlagt, wobei von der Druckbeaufschlagung ausgelöste Force-Feedback-Funktionen der Fläche von dem Sensor erfasst werden.

Der Literaturstelle HOWE R D ET AL: "Integrating Tactile Sensing with control for Dextrous Manipulation", 1990-08-20, ist der Einsatz von Beschleunigungssensoren zu entnehmen, um ein Manipulations- bzw. Vibrationsereignis zwischen einem Finger und einem Objekt zu erfassen.

Nach JENNA L GRAHAM ET AL: "Development of a multi-modal-haptic feedback system for dextrous robotic telemanipulalion", 2011-10-09, werden Sensoren verwendet, um Sensordaten an einen Teleoperator in Form eines Benutzerimpulses zu übermitteln.

Aufgabe der vorliegenden Erfindung ist es, ein Verfahren und eine Anordnung der eingangs genannten Art so weiterzubilden, dass reproduzierbar eine Funktionalitäts- und Qualitätsprüfung einer Funktionen auslösenden Fläche, insbesondere eines Touchdisplays - auch Touchscreen genannt - zu ermöglichen, um reproduzierbar Prüfergebnisse zu erzielen, so dass Qualitätsschwankungen ausgelieferter intelligenter Flächen wie Displays dem Grunde nach unterbleiben.

Nach einem weiteren Aspekt soll die Möglichkeit bestehen, Touchscreens in Bezug auf Funktionalität und Qualität zu überprüfen, ohne dass deren Abmessungen zuvor bekannt sein bzw. eine ebene Oberfläche aufweisen müssen.

Zur Lösung der Aufgabe sieht die Erfindung vor ein Verfahren zum Überprüfen einer Funktionen auslösenden Fläche durch Druckbeaufschlagung von zumindest einem Teilbereich, vorzugsweise mehreren Teilbereichen der Fläche, insbesondere zur Überprüfung eines Touchscreens, wobei nach die Funktion auslösender Druckbeaufschlagung die Fläche bzw. der druckbeaufschlagte Teilbereich haptisch erfassbar reagiert, wobei der zumindest eine Teilbereich von einem ersten Tastelement, in dem ein erster Sensor integriert ist, mittels eines Handhabungsgeräts mit integrierten Kräfte- und Momentensensoren druckbeaufschlagt wird, wobei über die in dem Handhabungsgerät integrierten Kräfte- und Momentensensoren eine Krafteinleitung des ersten Tastelements in die Fläche geregelt wird, das ein einen aus Kunststoff bestehenden Körper gegenüber dem Handhabungsgerät schwingungsmäßig entkoppelndes Zwischenelement aufweist, wobei von der Druckbeaufschlagung ausgelöste Force-Feedback-Funktionen der Fläche von dem in dem Tastelement integrierten ersten Sensor in Form eines Vibrationssensors erfasst werden, und Amplitude und/oder Frequenz von Force-Feedback-Signalen analysiert und bewertet wird.

Die Druckbeaufschlagung wird definiert vorgegeben und kann stets gleich sein, insbesondere bei durchzuführenden Wischbewegungen.

Das Tastelement wird mittels eines Handhabungsgerätes geführt, in dem Druck- und Momentensensoren integriert sind. Hierdurch besteht die Möglichkeit, dass das Moment des eine Wischbewegung ausübenden Tastelements konstant gehalten wird. Die Anpresskraft des Tastelements wird mittels des bzw. der in dem Handhabungsgerät integrierten Kräfte- und/oder Momentensensors bzw. -sensoren ermittelt, um somit die Auslösekraft für Force-Feedback-Funktionen zu ermitteln. Durch die in dem Handhabungsgerät integrierten Sensoren folgt eine Regelung des auf die Fläche einwirkenden Drucks derart, dass dieser konstant oder im Wesentlichen konstant ist.

Mittels des in dem Tastelement integrierten Vibrationssensors werden die durch die Druckbeaufschlagung ausgelösten Reaktionen erfasst, wobei insbesondere ein dreidimensional messender Vibrationssensor zum Einsatz gelangt. Hierdurch ergibt sich der Vorteil, dass von der Fläche ausgelöste Reaktionen erfasst werden, die nicht nur senkrecht zur von der Fläche aufgespannten Ebene verlaufen, sondern auch in der Ebene z. B. durch Verschieben der Fläche quer bzw. senkrecht zur Wirkrichtung des Tastelementes.

Unabhängig und eigenerfinderisch ist dabei vorgesehen, dass die Wirkrichtung des Tastelements auf die Fläche unabhängig von der Position des Tastelementes zu der Fläche im Kontaktpunkt entlang der durch den Kontaktpunkt verlaufenden Flächennormalen verläuft. Es wird stets in Normalenrichtung gemessen und zwar flächenverlaufsunabhängig.

Wird zur Messung der auf die Fläche bzw. einen Teilbereich dieser wirkenden Kraft bzw. der Druck mit der in dem Handhabungsgerät integrierten Druck- und/oder Momentensensor bzw. -sensoren ermittelt, so besteht auch die Möglichkeit, dass in dem Tastelement ein zweiter Sensor integriert wird, über den die über das Tastelement auf die Fläche bzw. den Teilbereich wirkende Kraft bzw. der Druck gemessen wird.

Erfindungsgemäß wird quasi ein Aufsatzmodul für einen Prüfroboter vorgeschlagen, um über einen Stellantrieb den bzw. die Tastelemente zu einer zu überprüfenden Fläche wie Touchscreen, wie resistiver Touchscreen, auszurichten und auf dieser Operationen durchzuführen, um somit reproduzierbar Funktion und Qualität der intelligenten Fläche zu ermitteln. Dabei besteht die Möglichkeit, menschliche Fingergesten zu simulieren, d. h. nicht nur Druckbewegung, sondern auch die Funktionalität von Wisch- und Scrollbewegungen mit Nachlauf korrekt zu prüfen. Der bzw. die auch als Prüffinger zu bezeichnenden Tastelemente werden hinsichtlich Druck, Geschwindigkeits- und Beschleunigungsprofil überprüft, um somit die für die von einer Person auszuübenden Gestiken zu simulieren und zu überprüfen, ob die erforderlichen Funktionen wie Betätigen von Komponenten wie Ein- und Ausschalten von Licht, Regelung der Klimatisierung, Darstellen und Verändern von Straßenkarten, um nur einige Beispiele zu nennen, ordnungsgemäß erfüllt werden. Es kann jegliche Form von Zweifingergestik simuliert werden, die für die Bedienung von Touchpanels nötig ist, wobei man sich die geometrischen Freiheitsgrade eines Prüfroboters ergänzend zu Eigen machen kann.

Dabei ist insbesondere vorgesehen, dass das Tastelement derart weich ausgebildet ist, dass dieses in seinen mechanischen Materialeigenschaften einer menschlichen Fingerkuppe nachempfunden wird. Hierzu ist insbesondere vorgesehen, dass das Tastelement in seinem freien Ende einen aus Kunststoff, insbesondere thermoplastischem Kunststoff wie Polyvinylidenfluorid bestehenden Körper aufweist, der zu seinem freien Ende hin kuppenförmig ausgebildet sein kann, wobei in dem Kunststoff der Vibrationssensor eingegossen sein sollte.

Selbstverständlich kann der mit der Fläche wechselwirkende Bereich des Tastelementes auch eben bzw. abgeflacht ausgebildet sein.

Es entsteht ein ganzheitliches kraftsteuerbares Prüfsystem, welches sowohl die Beweglichkeit als auch die taktilen Fähigkeiten menschlicher Prüfbewegungen vollständig nachempfindet. Es ist eine Force-Feedback-Prüffunktionalität gegeben, wobei außerdem verschiedene Prüfbewegungen nachempfunden werden können.

Daher zeichnet sich die Erfindung insbesondere dadurch aus, dass dem ersten Tastelement ein sowohl mit diesem als auch zu diesem bewegbares zweites Tastelement zugeordnet wird, mittels dessen die Fläche sowohl punktuell kraftbeaufschlagbar als auch berührend auf der Fläche entlang dieser und zu dem ersten Tastelement verstellbar ist. Punktuell schließt auch einen Flächenbereich geringer Erstreckung ein, z. B. eine Fingerfläche von z. B. 1 cm². Dabei sollte das zweite Tastelement entsprechend dem ersten Tastelement aufgebaut sein. Insbesondere sollte das erste Tastelement mittels des Handhabungsgeräts derart bewegt werden, dass der zu berührende Teilbereich in dessen Normalenrichtung kraftbeaufschlagt wird.

Es besteht die Möglichkeit, eine 3D-Kräfte bzw. 3D-Momenten-geregelte Positionierung und Wischbewegung sowie Druckbeaufschlagung durchzuführen, wobei unabhängig von der Stellung des bzw. der Tastelemente diese auf die Fläche einen gleichen Druck ausüben bzw. gleiche Kräfte einleiten.

Um zu verhindern, dass die Schwingungen, die von der Fläche auf das Tastelement übertragen werden, in das Handhabungsgerät wie einen Arm des Roboters eingekoppelt werden, ist insbesondere vorgesehen, dass das Tastelement ein den aus Kunststoff bestehenden Körper gegenüber dem Handhabungsgerät schwingungsmäßig weitgehend entkoppelndes Zwischenelement, wie Gummielement, aufweist. Die Entkopplung erfolgt insbesondere im relevanten Frequenzbereich von 200 ± 50 Hz.

Unabhängig hiervon kann erfindungsgemäß die Force-Feedback-Frequenz bzw. -amplitude der Fläche gemessen werden.

Des Weiteren zeichnet sich die Erfindung dadurch aus, dass die zu prüfende Fläche über einen als optischer Sensor wie Kammer ausgebildeten dritten Sensor erfasst wird. Hierdurch wird überprüft, ob bei der Betätigung von Teilbereichen der Fläche auch die gewünschten Darstellungen angezeigt werden. Dabei sollte insbesondere der dritte Sensor mit dem ersten Tastelement mitbewegt werden.

Insbesondere ist jedoch vorgesehen, dass mittels des Tastelements die zu messende Fläche bzw. die eines zu überprüfenden Touchscreens ausgemessen wird, wobei auch gebogene Flächen erfasst werden. Hierzu können die Positionskoordinaten des Tastelements während des Kontakts mit der Fläche benutzt werden, um aus diesen Koordinaten Geometrie und Abmessungen der Fläche zu ermitteln.

Insbesondere ist jedoch vorgesehen, dass man berührungslos die Fläche und deren geometrischen Verlauf ausmisst. Dies muss nicht nur optisch sein, sondern kann bei kapazitiven Touchscreens durch Nutzung dessen Eigenschaften erfolgen, in dem man die Proximity-Eigenschaften ausnutzt, d. h., dass bei Näherung an die Fläche ab einem bestimmten Abstand eine Reaktion wie Vibration einsetzt. Der Touchscreen ist sodann über eine Schnittstelle mit der Steuerung des Handhabungsgerätes verbunden, um die Koordinaten zu ermitteln, bei denen die Vibration bzw. die Reaktion ausgelöst worden ist.

Durch Ermittlung der Geometrie der Fläche, also ob diese eben oder gekrümmt oder teilweise gekrümmt ausgebildet ist, ist die Möglichkeit gegeben, dass die Wirkrichtung des Tastelements stets senkrecht zur Oberfläche, also zum Berührungspunkt verläuft. Hierdurch ist eine Reproduzierbarkeit der Messergebnisse sichergestellt.

Es wird erfindungsgemäß die Anpresskraft eines Tastelements mit dem bzw. den Kraft- bzw. Momentensensor bzw. -sensoren des Handhabungsgeräts gemessen. Die Auslösekraft für Force-Feedback-Funktionen kann ermittelt werden. Ferner kann mittels des Momentensensors die Anpresskraft eines zweiten Tastelementes überwacht und eingehalten werden.

Unabhängig hiervon wird durch die Entkopplung zwischen Handhabungsgerät und zu überprüfender Fläche wie Touchscreen sichergestellt, dass eine sichere Überprüfung der Funktion des Force-Feedback-Sensors erfolgt.

Des Weiteren können drei rotatorische und drei translatorische Freiheitsgrade des Handhabungsgerätes genutzt werden, die den relativen Bewegungen der Tastelemente überlagert werden können.

Es können Amplitude und/oder der Frequenz des Force-Feedback-Signals analysiert und bewertet werden.

Erfindungsgemäß erfolgt eine Funktionalitäts- und Qualitätsprüfung von Funktionen auslösenden Flächen, insbesondere Touchdisplays oder -screens, wobei der bzw. die Tastelemente eine Nachbildung menschlicher fein ausgelöster Fingergewebestrukturen darstellt. Dabei wird insbesondere reproduzierbar eine dreidimensionale Vibrationssensorik in die Gewebenachbildung integriert, die durch den aus Kunststoff bestehenden Körper, dessen flächenseitiger Bereich vorzugsweise kuppenförmig insbesondere durch einen Abschnitt eines Kugelsegments ausgebildet wird, wobei der von der Längsachse des Tastelements durchsetzte Scheitelbereich abgeflacht ist bzw. sein kann. Der Vibrationssensor ist mit seiner Gewebenachbildung im Inneren empfindlich und gibt somit eine korrekte Abbildung der humanen, taktilen Sensorik, das mechanische Dämpfungsverhalten im Gewebeimitat wieder.

Das Tastelement bzw. die Tastelemente können über Stellantriebe hoher Dynamik und Reproduzierbarkeit gewünschte Beschleunigungs- und Geschwindigkeitsprofile durchführen, so dass eine vollständige Prüfbarkeit aller Funktionalitäten moderner Touchdisplays erreicht wird. Dabei besteht des Weiteren die Möglichkeit, Vielfingergestiken zu bewerten.

Insbesondere sieht die Erfindung vor, dass Messwerte anhand definierter Qualitätsfunktionen analysiert und bewertet werden, wobei die Qualitätsfunktion mittels Operatoren menschliche Bewertungsschemata bzw. -regeln nachbilden und anhand dieser Bewertungsaussagen erstellbar sind. Um die diesbezüglichen Maßnahmen durchzuführen, gelangen Verfahren und Maßnahmen zur Anwendung, wie diese der DE 10 2005 006 575 A1 zu entnehmen sind, auf deren Offenbarung vollinhaltlich Bezug genommen wird.

Insbesondere ist die Erfindung durch ein Verfahren zum Überprüfen einer Funktionen auslösenden Fläche durch Druckbeaufschlagung von zumindest einem Teilbereich dadurch gekennzeichnet, dass ein erstes Tastelement mit einem Handhabungsgerät verbunden wird, dass mittels des Handhabungsgeräts das erste Tastelement den zumindest einen Teilbereich druckbeaufschlagt, dass zur Überprüfung von den durch die Druckbeaufschlagung auszulösenden Funktionen die über einen in dem ersten Tastelement integrierten Sensor auf die Druckbeaufschlagung erfolgte mechanische Reaktion erfasst wird, und/oder ein dem ersten Tastelement zugeordnetes zweites Tastelement die Fläche druckbeaufschlagt und/oder zu dem ersten Tastelement die Fläche druckbeaufschlagend bewegt wird und durch die Druckbeaufschlagung bzw. Bewegung ausgelöste Funktion oder Funktionen erfasst wird bzw. werden, und/oder dass das dem ersten Tastelement zugeordnete zweite Tastelement zusammen mit dem ersten Tastelement auf der Fläche und diese berührend bzw. druckbeaufschlagend bewegt wird.

Dabei ist insbesondere vorgesehen, dass die Druckbeaufschlagung geregelt erfolgt, d. h., dass das Tastelement in den Kontaktstellen die Fläche stets mit gleichem Druck beaufschlagt, wobei die Wirkrichtung des Tastelementes, also der Kraftvektor, mit der Normalen zusammenfällt, in der das Tastelement die Fläche berührt.

Dabei ist insbesondere vorgesehen, dass vor Druckbeaufschlagung der Fläche zu deren Funktionsüberprüfung mittels insbesondere des ersten Tastelements Abmessung und/oder Verlauf der Fläche ausgemessen wird. Verlauf bedeutet dabei, dass ermittelt wird, ob die Fläche eben ist oder von einer Ebene abweicht, insbesondere eine Wölbung aufweist und die geforderte Messbahn generiert wird.

Der Verlauf kann berührend oder kontaktlos ermittelt werden, wobei bei einem kapazitiven Touchscreen insbesondere die Proximity-Eigenschaften benutzt werden.

Des Weiteren ist vorgesehen, dass bei die Fläche druckbeaufschlagender Bewegung des ersten und/oder zweiten Tastelements auf der Fläche dargestellte ausgelöste Funktionen optisch erfasst werden.

Gegenstand der Erfindung ist auch eine Anordnung umfassend ein Handhabungsgerät, in dem Kräfte- und Momentensensoren integriert sind, ein erstes Tastelement, in dem ein erster Sensor integriert ist, und eine Auswerteeinheit zum Überprüfen einer Funktionen auslösenden Fläche durch Druckbeaufschlagung von zumindest einem Teilbereich, vorzugsweise mehreren Teilbereichen der Fläche, insbesondere zur Überprüfung eines Touchscreens, wobei nach die Funktion auslösender Druckbeaufschlagung die Fläche bzw. der druckbeaufschlagte Teilbereich haptisch erfassbar reagiert, wobei von dem Handhabungsgerät mit integrierten Kraft- und Momentensensoren das erste Tastelement mit dem integrierten ersten Sensor ausgeht, über das mittels des Handhabungsgerätes die Fläche druckbeaufschlagbar ist, wobei in dem ersten Tastelement zumindest ein Vibrationssensor als der erste Sensor integriert ist, der seinerseits gegenüber dem Handhabungsgerät schwingungsmäßig entkoppelt ist, und der erste Sensor mit der Auswerteeinheit verbunden ist, wobei die Auswerteeinheit ausgestattet ist, Signale des ersten Sensors, die durch durch Druckbeaufschlagung ausgelöste Force-Feedback-Funktionen erzeugt sind, bezüglich Amplitude und/oder Frequenz zu analysieren und zu bewerten, wobei über die in dem Handhabungsgerät integrierten Kräfte- und Momentensensoren über das Tastelement auf die Fläche einwirkende Kraft regelbar ist. Insbesondere ist vorgesehen, dass dem ersten Tastelement ein zweites Tastelement zugeordnet ist, das zusammen mit dem ersten Tastelement mittels des Handhabungsgeräts und/oder zu dem ersten Tastelement verstellbar ist.

In Weiterbildung der Erfindung wird vorgeschlagen, dass dem ersten Tastelement ein die Fläche oder zumindest einen Teil dieser erfassbarer optischer Sensor zugeordnet ist, so dass überprüfbar ist, ob die durch die Druckbeaufschlagung bzw. Bewegung des bzw. der Tastelemente ausgelösten Funktionen diejenigen sind, die optisch in Erscheinung treten sollen.

Besonders zeichnet sich die Erfindung dadurch aus, dass zumindest in dem ersten Tastelement, insbesondere in dem ersten und dem zweiten Tastelement, jeweils ein erster Sensor in einem aus Kunststoff bestehenden Körper eingegossen ist, dessen flächenseitig auszurichtender Bereich vorzugsweise kuppenartig ausgebildet ist, wobei insbesondere der die Fläche berührende Bereich abgeflacht ist oder sein kann. Die Erfindung zeichnet sich dadurch aus, dass die Dimension des Tastelements und die Kuppe dem menschlichen Finger nachempfunden sind.

Des Weiteren zeichnet sich die Erfindung dadurch aus, das der Körper gegenüber der Handhabungseinrichtung bzw. einem mit dieser verbundenen Antrieb über ein elastisches Element wie Gummielement schwingungsmäßig entkoppelt ist. Auch sollte das Tastelement einen Drucksensor als zweiten Sensor aufweisen, der mit dem Körper an dessen handhabungsseitigem Ende verbunden ist. Dabei kann der zweite Sensor als Dehnmessstreifen ausgebildet sein.

Des Weiteren zeichnet sich die Anordnung dadurch aus, dass das Messmodul eine eigene Prüfintelligenz zur Ausführung der Vielfingergestiken und zur Erfassung und Bewertung der Prüfergebnisse beinhaltet. Entsprechend ist in das Messmodul eine Mikrocontroller-Steuerung integriert, die diese Prüfintelligenz abbildet.

Des Weiteren schafft ein Regelkreis die Voraussetzung für die Integration in die Sechsachsenkinematik der Handhabungseinrichtung, also des Messroboters, sowie die Einbindung in die notwendigen Prüfsequenzen.

Erfindungsgemäß wird ein intelligentes mechanisches Prüfmodul zur Durchführung von Prüfsequenzen im Bereich der Vielfingergestik und des Force-Feedback auf Touchpads zur Verfügung gestellt. Mittels mechanischer Gewebeeigenschaften, die durch einen aus Kunststoff wie Polyvinylidenfluorid bestehenden Körper nachempfunden wird, und mechanische Sensorik werden menschliche Fingerkuppen nachgebildet.

Erfindungsgemäß können Einfingergesten (Klick, Doppelklick, Bewegung), Vielfingergesten (Zoom-in, Zoom-out, Drehung) überprüft werden. Prüffelder auf der zu überprüfenden Fläche können mit hoher Sicherheit erkannt werden. Es besteht die Möglichkeit, Abstandsveränderungen der Tastelemente zwischen 5 mm/s und 200 mm/s zu erfassen. Der Beschleunigungsbereich der Abstandsbewegung liegt zwischen 0,1 m/s² und 1 m/s². Die dreidimensionale Kraftsensorik kann im Bereich bis zu 1 N in jeder Raumrichtung messen.

Die Beschleunigungssensorik arbeitet im Bereich 2 G, Beschleunigungen kleiner als 0,01 G können gemessen werden. Dabei können Vibrationen in dem Finger von 30 - 400 Hz präzise vermessen werden.

Dabei kann zusätzlich der insbesondere 6-dimensional wirkende Kraft-Momentensensor des das bzw. die Tastelemente aufnehmenden Roboterarms benutzt werden, um ein Ausrichten des zumindest ersten Tastelementes in der Normalenrichtung der zu berührenden Fläche zu ermöglichen bzw. sicherzustellen.

Durch die dimensionsmäßige Erfassung der Fläche kann gleichzeitig das Roboterkoordinatensystem mit den Koordinaten der Fläche korreliert werden, gleichwenn auch ein CAD-Modell der Fläche als Basis benutzt werden kann.

Insbesondere ist vorgesehen, dass der in dem Tastelement integrierte erste Sensor ein 3D-Sensor wie dreiachsiger Beschleunigungssensor ist, so dass Reaktionen der zu überprüfenden Fläche sowohl senkrecht zu der von dieser aufgespannten Ebene als auch in der Ebene selbst erfassbar sind.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

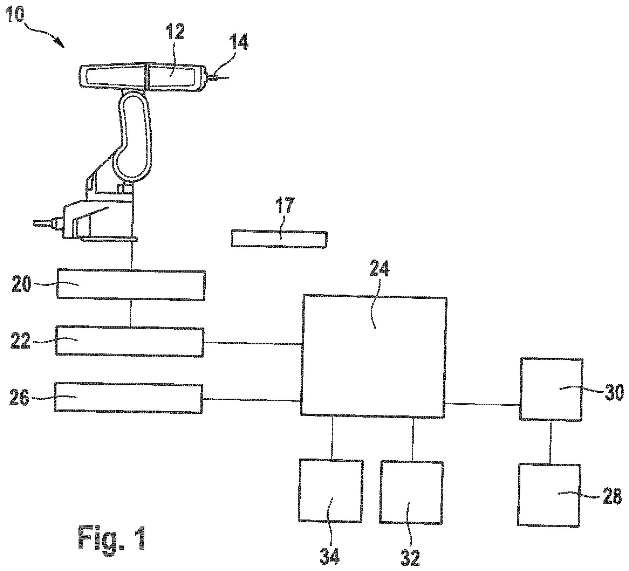

- Fig. 1: eine Prinzipdarstellung einer Anordnung zur Funktionalitäts- und Qualitätsprüfung einer Fläche,
- Fig. 2: einen Ausschnitt der Messanordnung gemäß Fig. 1,
- Fig. 3: ein Tastelement in vergrößerter Darstellung,
- Fig. 4: eine Tastelementanordnung in Prinzipdarstellung und

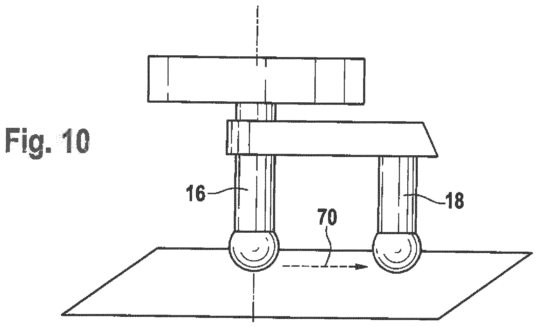

- Fig. 5 - 10: Prinzipdarstellungen von durchführbaren Gestiken.

In den Figuren, in denen grundsätzlich für gleiche Elemente gleiche Bezugszeichen verwendet werden, sind die die Erfindung prägenden Merkmale wiedergegeben, um eine automatisierte Funktionalitäts- und Qualitätsprüfung von intelligenten Flächen zu ermöglichen, über die bei Druckbeaufschlagung und/oder Berührung Funktionen ausgelöst werden. Insbesondere handelt es sich hierbei um Touchdisplays oder -screens, wie diese im zunehmenden Umfang in Kraftfahrzeugen zum Einsatz gelangen, um gewünschte Funktionen auszulösen, wie z. B. Anschalten bzw. Ausschalten von Licht, Temperieren und Klimatisieren des Kraftfahrzeuginneren oder Darstellung von Straßenkarten, um nur einige Beispiele zu nennen.

Um eine diesbezügliche reproduzierbare Überprüfung und Qualitätsbewertung vornehmen zu können, wird eine Handhabungseinrichtung verwendet, bei der es sich insbesondere um einen Prüfroboter 10 handelt mit einer am Ende vorhandenen Messeinrichtung 14, die zumindest ein, vorzugsweise zwei Tastelemente 16, 18 in nachstehend beschriebener Art aufweist. Die Messeinrichtung 14 kann z. B. am Ende eines insbesondere CNC-gesteuerten Roboterarms 12 vorhanden sein.

Mit der Messeinrichtung 14 soll eine durch Druckbeaufschlagung bzw. Berührung Funktionen auslösende Fläche 17 auf ihre Funktionalität hin reproduzierbar überprüft werden. Die insbesondere in Echtzeit ermittelten Messwerte der Messeinrichtung 14 werden einer Messwerterfassung 20 zugeführt, um mittels z. B. einer elektronischen Schaltung 22 digitalisiert und sodann einer Auswerteeinheit 24 wie Computer zugeführt zu werden, um die Messwerte anhand definierbarer Qualitätsfunktionen zu analysieren und zu bewerten.

Über eine Schnittstelle ist die Fläche (17) bzw. eine diese aufweisende Einheit wie Touchdisplay mit der Auswerteeinheit 24 verbunden, um z. B. Koordinaten des Tastelementes 16 bzw. 18 zu ermitteln, wenn z. B. bei Berührung oder im Proximity-Verfahren die Fläche 17 vibriert. Diesbezügliche Koordinatenbestimmungen werden benötigt, wenn die Abmessungen der Fläche 17 ermittelt werden sollen bzw. deren Geometrieverlauf, ob diese eben, gewölbt oder teilweise gewölbt ist. Dieser Geometrieverlauf wird dann benötigt, wenn die Wirkrichtung der Tastelemente auf die Fläche 17 in jedem Messpunkt gleich sein soll. Erfindungsgemäß ist insbesondere vorgesehen, dass in jedem Messpunkt die Wirkrichtung des Tastelementes 16, 18 mit der Oberflächennormalen zusammenfallt.

An der Auswerteinheit 24 kann ein Speicher 26 angeschlossen sein, der die Messwerte sowie weitere Daten bzw. Zwischenergebnisse speichert. Über ein Eingabegerät wie Tastatur oder Mouse 28 können Qualitätsfunktionen erstellt, die entsprechenden Operatoren ausgewählt sowie Konstanten, Parameter und/oder weitere Daten eingegeben werden. Eine Visualisierung kann über einen Editor 30 erfolgen, der auf einem nicht dargestellten Bildschirm visualisiert werden kann. Mit einem Ausgabegerät 32, bei dem es sich gleichfalls um einen Bildschirm handeln kann, werden die Bewertungsergebnisse bzw. Aussagen dargestellt. Über eine Schnittstelle 34 können Daten z. B. an einen weiteren Rechner oder an ein Netzwerk weitergeleitet werden.

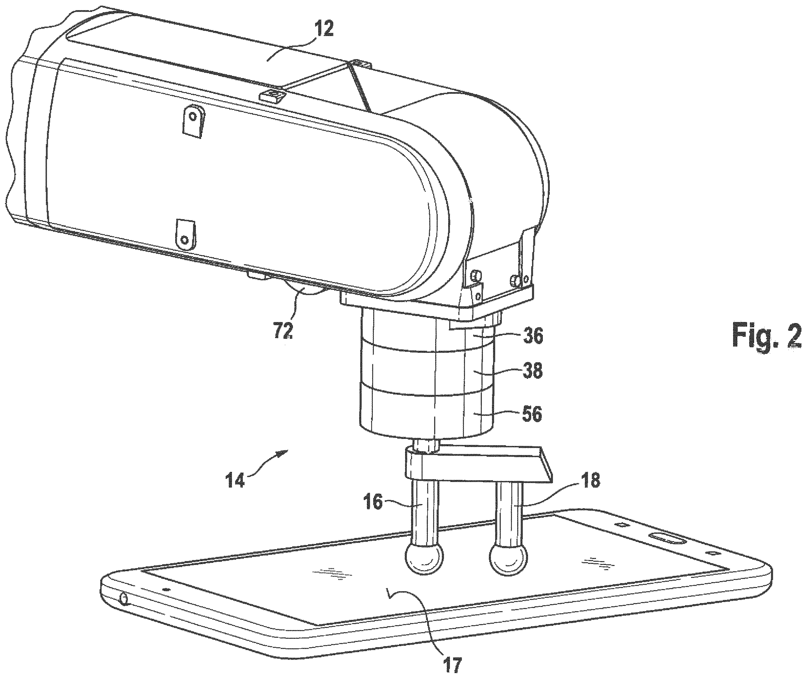

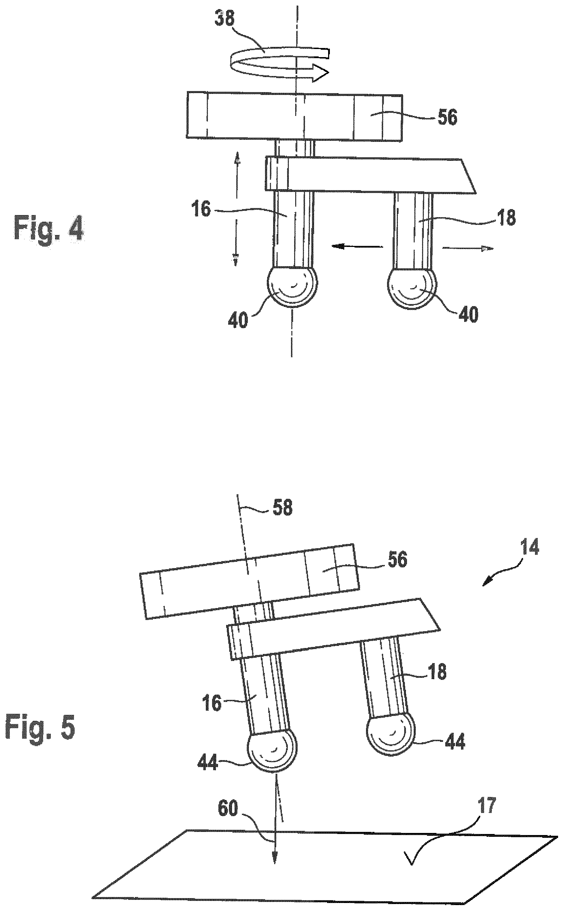

Der Fig. 2 ist in vergrößerter Darstellung ein Ausschnitt des Prüfroboters 10, und zwar dessen Arm 12 dargestellt, an dessen Flansch 36 ein Antriebsmodul 38 befestigt wird, von dem die Messeinrichtung 14 ausgeht, die erwähntermaßen im Ausrührungsbeispiel die beiden Tastelemente 16, 18 aufweist, um die Fläche 17, wie Touchscreen bzw. Display, auf ihre bzw. seine Funktionalität hin zu überprüfen. Dabei sind entsprechend der Darstellung in Fig. 4 das in der Zeichnung links dargestellte und als erstes Tastelement zu bezeichnende Tastelement 16 in seiner Höhe verstellbar und das zweite Tastelement 18 zu dem ersten Tastelement 16 verstellbar, wobei nicht nur eine Abstandsveränderbarkeit, sondern auch ein Verschwenken möglich ist, wie nachstehend erläutert wird. Das zweite Tastelement 18 kann um das erste Tastelement 16 gedreht werden. Auch besteht die Möglichkeit, das erste Tastelement 16 derart zu dem zweiten Tastelement zu verstellen, dass ausschließlich das erste Tastelement die Fläche 17 kontaktiert.

Unabhängig hiervon ist vorgesehen, dass das jeweilige Tastelement 16, 18 auf die Fläche 17 mit gleicher Kraft einwirkt bzw. gleichen Druck ausübt, insbesondere bei einer Wischbewegung. Dies wird durch in dem Prüfroboter 10 bzw. dessen Arm 12 integrierte 3D-Kräfte- bzw. 3D-Momentensensor bzw. -sensoren sichergestellt. Es erfolgt eine geregelte Positionierung bzw. Wischbewegung.

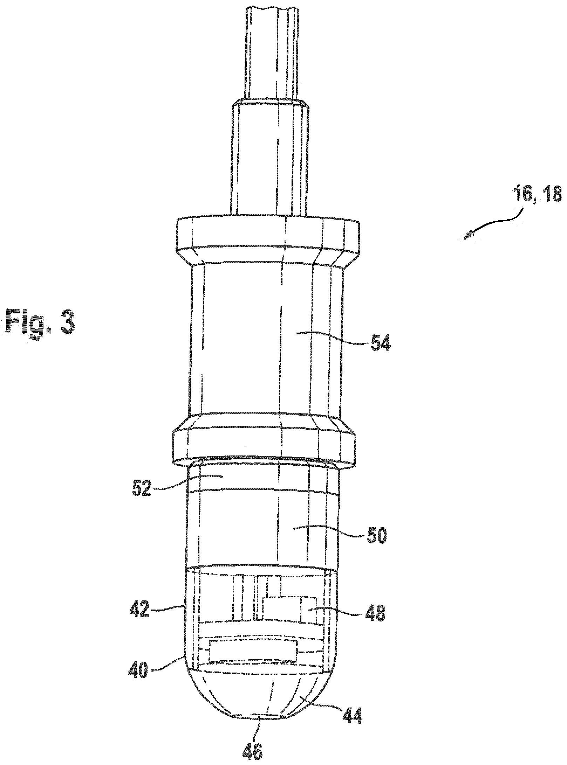

Jedes Tastelement 16, 18 sollte einen gleichen Aufbau aufweisen, wie dieser der Fig. 3 zu entnehmen ist. So weist das Tastelement 16, 18 in seinem vorderen mit der Fläche 17 in Berührung gelangenden Bereich einen aus Kunststoff, wie Polyvinylidenfluorid bestehenden Körper 40 auf, der dann, wenn ein kapazitiver Touchscreen 17 zu überprüfen ist, elektrisch leitend ist. Der Körper 40 weist einen zylindrischen Abschnitt 42 und einen endseitigen kuppelförmigen Abschnitt 44 auf, der einem Kugelabschnitt mit abgeflachtem Frontbereich 46 gleichkommt, der mit der Fläche 17 kontaktiert wird.

Selbstverständlich kann das mit der Fläche 17 kontaktierende Ende auch eben ausgebildet sein, d. h. der kuppelförmige Abschnitt 44 ist nicht zwingend vorgegeben.

Innerhalb des Körpers 40 ist ein Vibrationssensor 48, insbesondere ein dreidimensional arbeitender Vibrationssensor, integriert und in den Kunststoff eingegossen. Der Sensor 48 ist vorzugsweise ein dreiachsiger Beschleunigungssensor. An den Körper 40 schließt sich im Ausführungsbeispiel ein eindimensional wirkender Drucksensor 50 an, bei dem es sich um einen DMS-Sensor handeln kann.

Aufgrund des dreidimensional arbeitenden Vibrationssensors 48 besteht die Möglichkeit, Schwingungen der Fläche 17 nicht nur senkrecht zu dieser, sondern auch in deren Ebene zu messen.

Durch den aus Kunststoff bestehenden Körper 40 mit dessen insbesondere kuppenseitigem Ende 44, 46 und dem integrierten Vibrationssensor 48 wird eine menschliche Fingerkuppe nachempfunden.

An den Drucksensor 50 - ggfs. über eine gleichfalls aus Kunststoff bestehende Zwischenschicht 52 - schließt sich ein zylindrischer Entkopplungskörper 54 an, um auf den Körper 40 übertragene Schwingungen nicht auf die Antriebseinrichtung 38 und den Roboterarm 22 zu übertragen. Bei dem Entkopplungselement 56, das eine zylindrische Geometrie aufweist, handelt es sich insbesondere um ein Gummielement, wie Nitrilkautschuk, das im Falle der Funktionalitätsprüfung einer kapazitiven Fläche elektrisch leitend ist.

Die schwingungsmäßige Entkopplung der Fläche 17, also des Touchscreens zu dem Mess-bzw. Prüfroboter 10 ist wichtig, um die Funktion des Vibrationssensors 48, der als Force-Feedback-Sensor wirkt, nicht negativ zu beeinflussen.

Mittels der beiden Tastelemente 16, 18 und der in diesen integrierten Sensoren 48, 50 können Ein- und Vielfingergesten nachempfunden werden. Dabei werden die bei Multifunktions-Touchdisplays üblichen Force-Feedback-Funktionen erfasst, die dann ausgelöst werden, wenn ein erfolgreicher Klick durchgeführt worden ist, so dass dieser durch eine mechanische Vibration des Displays, also der Fläche 17, signalisiert wird.

Wie bereits im Zusammenhang mit der Fig. 4 verdeutlicht worden ist, sind die Tastelemente 16, 18 mit den der menschlichen Fingerkuppen nachempfundenen und aus Kunststoff bestehenden Körpern 40 mit den integrierten Vibrationssensoren 48 relativ zueinander verstellbar, wobei die Sensoren 16, 18 von einer gemeinsamen Halterung 56 ausgehen, die mit dem Stellantrieb 38 verbunden sind.

Wie die Fig. 5 verdeutlicht, wird die Messeinrichtung 14 auf die Fläche 17 ausgerichtet, wobei zunächst die Längsachse 58 des Tastelementes 16 geneigt zu der von der Fläche 17 ausgehenden Normalen verlaufen kann. Da zuvor Lage und Abmessungen der Fläche 17 insbesondere durch das Tastelement 16, d. h., durch Entlangfahren der Kuppe 44 bzw. des abgeflachten Teils 46 entlang der Ränder der Fläche 17 und Bestimmung dessen Verlaufs, ob also die Fläche 17 eben ist oder z. B. gekrümmt ist, ermittelt und somit die Koordinaten der Fläche 17 in Koordinaten des Prüfroboters 10 umgerechnet worden sind, kann die Messeinrichtung 14 derart zu der Fläche 17 ausgerichtet werden, dass die Längsachse des Tastelementes 16 in Normalen-Richtung zu der Fläche 17 verläuft und abgesetzt wird, wie durch den Pfeil 60 symbolisiert wird. Hierzu wird auch der 6-dimensionale Kraft-Momentensensor genutzt, der im Roboterarm 12 integriert ist. Dabei besteht die Möglichkeit, dass die Messkuppe 44 des Tastelementes 16 in Richtung der Fläche 17 gegenüber der Messkuppe 44 des Tastelements 18 vorsteht, so dass die Fläche 17 in einem Punkt kontaktiert wird, also eine Einfingergestik simuliert wird. Sofern das Tastelement 16 und damit die Fingerkuppe 44 mit dem erforderlichen Druck zum Auslösen einer Schaltfunktion auf die Fläche 17 aufgesetzt wird, erfolgt ein Force-Feedback, der von dem in dem Körper 40 integrierten Vibrationssensor 48 erfasst wird.

Anschließend oder gleichzeitig besteht die Möglichkeit, zusammen mit dem ersten Tastelement auch das zweite Tastelement auf die Fläche 17 aufzusetzen, so dass eine Zweifingergestik simuliert ist.

Unabhängig hiervon können mit dem ersten Tastelement ein oder mehrere Klicks durchgeführt werden, um gewünschte Funktionen auszulösen, wobei der Druck über den Sensor 50 gemessen wird, um reproduzierbare Aussagen über Qualität und Funktion des Displays, also der Fläche 17 treffen zu können.

Mittels der in dem Prüfroboter 10 integrierten Kräfte- und Momentensensoren wird die Anpresskraft des Tastelements 16 bzw. 18 gemessen. Die Auslösekraft für eine Force-Feedback-Funktion kann ermittelt werden. Insbesondere mittels des in dem Prüfroboter 10 bzw. dessen Arm integrierten Momentensensors kann Anpresskraft des zweiten Sensors 18 überwacht werden und durch Rotation des Messroboters 10 bzw. Prüfarms eingehalten werden.

Des Weiteren besteht erfindungsgemäß die Möglichkeit, dass die drei rotatorischen und drei translatorischen Freiheitskreise des Messroboters genutzt werden, die den relativen Bewegungen der Tastelemente 16, 18 überlagert werden können.

Die Force-Feedback-Signale können aufgrund der in den Tastelementen 16, 18 integrierten, insbesondere 3D-Vibrationssensor 48 bezüglich Amplitude und Frequenz erfasst und sodann analysiert und bewertet werden.

Softwaremäßig kann auf einfache Weise eine Zweifingergestik für einen Benutzter mit wenigen Einstellparametern wie z. B. Radius und Geschwindigkeit zugänglich gemacht werden.

Selbstverständlich ist es nicht erforderlich, dass das Tastelement 16 mit seiner Längsachse 58 zur Normalen ausgerichtet ist. Vielmehr kann auch eine Schrägstellung eingenommen werden. Durch den Drucksensor 50 sowie den Kraft-Momentensensor im Roboterarm 12 kann sodann der tatsächlich auf die Fläche 17 einwirkende Druck ermittelt werden. In diesem Fall wird - wie die zeichnerische Darstellung verdeutlicht - sichergestellt, dass ohne Verstellen des zweiten Tastelements 18 zu dem ersten Tastelement 16 nur dieses mit der Fläche 17 zusammenwirkt. Damit auch das zweite Tastelement 18, das gleichfalls einen Finger nachbildet, die Fläche 17 berührt, bedarf es eines Kippens der Messeinrichtung 14, wie durch den Pfeil 62 symbolisiert wird.

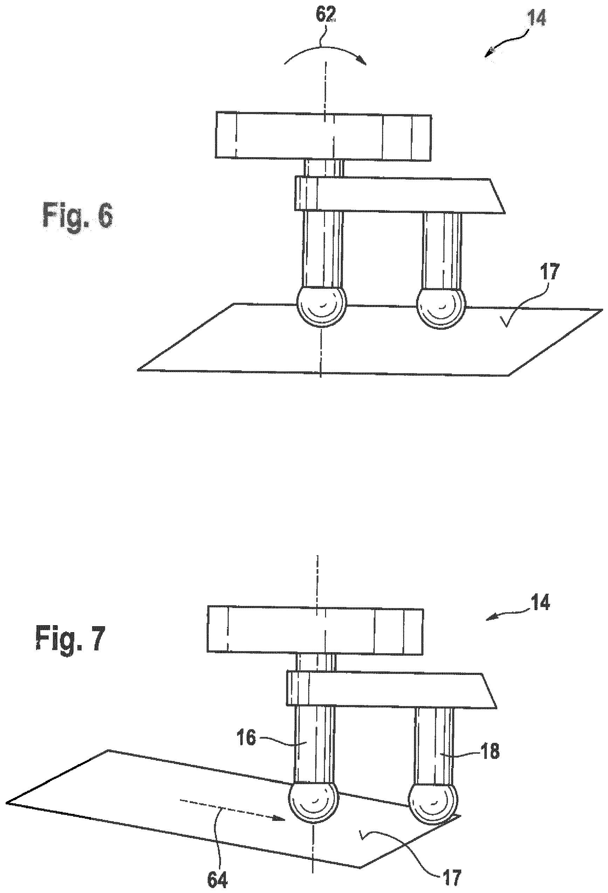

Der Fig. 7 ist zu entnehmen, dass die Messeinrichtung 14, die entsprechend der Fig. 6 mit beiden Tastelementen 16, 18, also deren Kuppen 44 bzw. Stirnflächen 46 die Fläche 17 berühren, über diese gezogen werden kann (gestrichelter Pfeil 64).

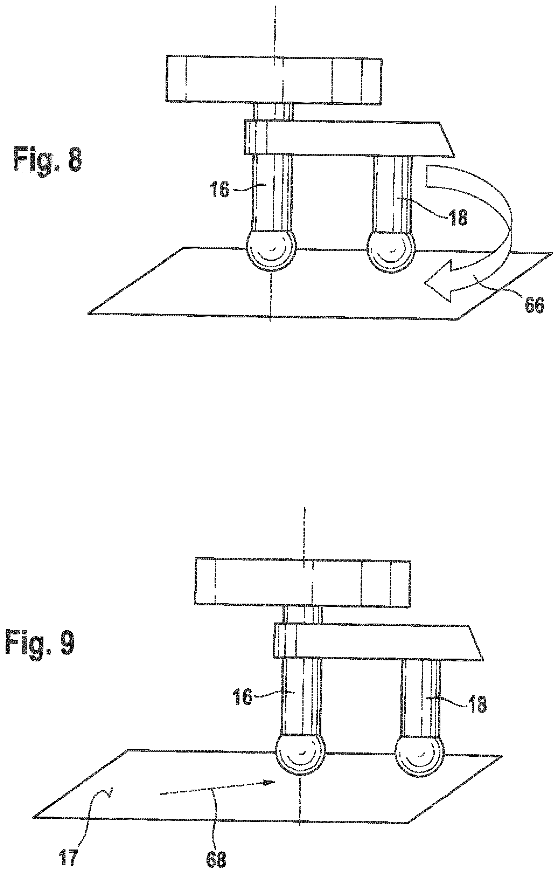

Das Ausführungsbeispiel der Fig. 8 symbolisiert, dass das zweite Tastelement 18 um das erste Tastelement 16 gedreht werden kann, d. h, es wird eine Bewegung simuliert, bei der ein Finger um einen anderen Finger gedreht wird (Pfeil 66).

In der Fig. 9 wird eine Zweifingergestik simuliert, nach der auf der Fläche 17 mit zwei Fingern gleichzeitig entlanggefahren wird (gestrichelter Pfeil 68), wohingegen die Fig. 7 verdeutlichen soll, dass ein Auseinanderbewegen der Tastelemente 16, 18 erfolgen kann (gestrichelter Pfeil 70), um z. B. eine Zoom-Bewegung zu initiieren.

Die Messergebnisse können sodann anhand definierbarer Qualitätsfunktionen analysiert und bewertet werden, wobei Qualitätsfunktions-Operatoren menschliche Bewertungsschemata bzw. -regeln nachbilden, um aufgrund dieser Bewertung eine Aussage über die Qualität und Funktion vornehmen zu können. Dies ist jedoch kein zwingendes Merkmal zur Auswertung der Messergebnisse. Vielmehr können Parameter vorgegeben werden, die einzuhalten sind, um in Abhängigkeit von Druck bzw. Geschwindigkeit und Beschleunigung der Tastelemente auszulösende Funktionen zu definieren, um sodann bei Einhalten der Parameter entsprechende Displays als Gut-Displays und die diesbezüglichen Kriterien nicht erfüllende Displays als Schlecht-Displays klassifizieren zu können.

Da insbesondere durch Verfahrbewegung auf einem Display und damit der Fläche 17 unterschiedliche oder sich ändernde Darstellungen auf dem Display wiedergegeben sind, kann die Messeinrichtung 14 ergänzend einen optischen Sensor umfassen, der ggfs. von dem Roboterarm 12 ausgehen kann, wie dies rein prinzipiell in der Fig. 2 dargestellt ist. Ein entsprechender Sensor, der mit dem Bezugszeichen 72 gekennzeichnet ist, befindet sich auf der der zu überprüfenden Fläche 17 zugewandten Seite des Roboterarms 12, um die gesamte Fläche 17 zu erfassen. Dabei kann eine Anordnung derart gewählt sein, dass durch die Tastelemente 16, 18 und den mit diesen verbundenen Elementen wie Antrieb 38 und Halterung 56 eine möglichst geringe Abschattung erfolgt.

Selbstverständlich besteht auch die Möglichkeit, dass ein optischer Sensor z. B. von der Halterung 56 oder einem anderen Element der Anordnung ausgeht, wobei sicherzustellen ist, dass die Fläche 17 im erforderlichen Umfang optisch erfasst wird.

## Patentansprüche

1. Verfahren zum Überprüfen einer Funktionen auslösenden Fläche (17) durch Druckbeaufschlagung von zumindest einem Teilbereich, vorzugsweise mehreren Teilbereichen der Fläche, insbesondere zur Überprüfung eines Touchscreens, wobei nach die Funktion auslösender Druckbeaufschlagung die Fläche bzw. der druckbeaufschlagte Teilbereich haptisch erfassbar reagiert, wobei der zumindest eine Teilbereich von einem ersten Tastelement (16), in dem ein erster Sensor (48) integriert ist, mittels eines Handhabungsgeräts (10) mit integrierten Kräfte- und Momentensensoren druckbeaufschlagt wird, wobei über die in dem Handhabungsgerät (10) integrierten Kräfte- und Momentensensoren eine Krafteinleitung des ersten Tastelements (16) in die Fläche (17) geregelt wird, das ein einen aus Kunststoff bestehenden Körper gegenüber dem Handhabungsgerät (10) schwingungsmäßig entkoppelndes Zwischenelement (56) aufweist, wobei von der Druckbeaufschlagung ausgelöste Force-Feedback-Funktionen der Fläche (17) von dem in dem Tastelement integrierten ersten Sensor (48) in Form eines Vibrationssensors erfasst werden, und Amplitude und/oder Frequenz von Force-Feedback-Signalen analysiert und bewertet wird.

2. Verfahren nach Anspruch 1,
**dadurch gekennzeichnet,**
**dass** als erster Sensor (48) ein 3D-Vibrationssensor, insbesondere dreiachsiger Beschleunigungssensor, verwendet wird, und/oder dass der erste Sensor (48) in einem aus Kunststoff, insbesondere thermoplastischem Kunststoff wie Polyvinylidenfluorid, bestehenden Körper integriert wie eingegossen wird, der eine Zylinderform mit sich zu seinem freien Ende verjüngenden Bereich mit kraftzubeaufschlagender Stirnfläche aufweist.

3. Verfahren nach Anspruch 1 oder 2,
**dadurch gekennzeichnet,**
**dass** in dem Tastelement (16, 18) ein zweiter Sensor (50) integriert wird, über den die über das Tastelement auf die Fläche (17) bzw. den Teilbereich wirkende Kraft bzw. der Druck gemessen wird.

4. Verfahren nach zumindest einem der vorherigen Ansprüche,
**dadurch gekennzeichnet,**
**dass** dem ersten Tastelement (16) ein sowohl mit diesem als auch zu diesem bewegbares zweites Tastelement (18) zugeordnet wird, mittels dessen die Fläche (17) sowohl punktuellartig kraftbeaufschlagbar als auch berührend auf der Fläche entlang dieser und zu dem ersten Tastelement verstellbar ist, wobei vorzugsweise das zweite Tastelement (18) entsprechend dem ersten Tastelement (16) aufgebaut wird.

5. Verfahren nach zumindest einem der vorherigen Ansprüche,
**dadurch gekennzeichnet,**
**dass** das erste Tastelement (16) mittels des Handhabungsgeräts (10) derart bewegt wird, dass der zu berührende Teilbereich in dessen Normalenrichtung kraftbeaufschlagt wird.

6. Verfahren nach zumindest einem der vorherigen Ansprüche,
**dadurch gekennzeichnet,**
**dass** das Zwischenelement (56) ein Gummielement ist.

7. Verfahren nach zumindest einem der vorherigen Ansprüche,
**dadurch gekennzeichnet,**
**dass** durch Verstellen des ersten Tastelements (16) und des zweiten Tastelements (18) zueinander die Fläche (17) berührende Fingergestiken simuliert werden.

8. Verfahren nach zumindest einem der vorherigen Ansprüche,
**dadurch gekennzeichnet,**
**dass** die Fläche (17) über einen als optischer Sensor (72) wie Kamera ausgebildeten dritten Sensor erfasst wird, der vorzugsweise mit dem ersten Tastelement (16) mitbewegt wird.

9. Verfahren nach zumindest einem der vorherigen Ansprüche,
**dadurch gekennzeichnet,**
**dass** mittels vorzugsweise des ersten Tastelements (16) Abmessung und/oder Geometrieverlauf der Fläche ausgemessen wird.

10. Verfahren nach Anspruch 4,
**dadurch gekennzeichnet,**
**dass** über in dem Handhabungsgerät (10) integrierte Kräfte- und/oder Momentensensoren Krafteinleitung des zweiten Tastelements (18) in die Fläche (17) geregelt wird, und/oder dass mittels Kräfte- und/oder Momentensensoren, die in dem Handhabungsgerät (10) integriert sind, Auslösekraft für eine Force-Feedback-Funktion der Fläche (17) ermittelt wird.

11. Verfahren nach Anspruch 4,
**dadurch gekennzeichnet,**
**dass** die Relativbewegung zwischen dem ersten und zweiten Tastelement (16, 18) von rotatorischen und/oder translatorischen Bewegungen des Handhabungsgeräts (10) überlagert werden.

12. Verfahren nach zumindest einem der vorhergehenden Ansprüche,
**dadurch gekennzeichnet,**
**dass** Abmessungen und/oder Geometrieverlauf der Fläche (17) berührungslos gemessen wird, wobei insbesondere eine Messung mittels eines optischen Sensors oder durch Auslösen einer Force-Feedback-Reaktion durch Berührung oder durch Annäherung durch zumindest eines der Tastelemente (16, 18) und die bei Auslösung der Force-Feedback-Reaktion ermittelten Koordinaten des zumindest einen Tastelements erfasst werden.

13. Verfahren nach zumindest einem der vorhergehenden Ansprüche,
**dadurch gekennzeichnet ,**
**dass** bei die Fläche (17) zumindest berührender Bewegung des Tastelements (16, 18) eine auf der Fläche dargestellte ausgelöste Funktion optisch erfasst wird, wobei vorzugsweise die erfasste bzw. ermittelte Funktion bewertet wird.

14. Verfahren nach zumindest Anspruch 13,
**dadurch gekennzeichnet,**
**dass** zumindest einer der Parameter aus der Gruppe Druckbeaufschlagung des zumindest einen Teilbereichs, Geschwindigkeit des auf der Fläche bewegten Tastelements (16, 18), Beschleunigung des auf der Fläche (17) bewegten Tastelements, Position des Tastelements auf der Fläche in Echt-Zeit ermittelt und ausgewertet werden.

15. Anordnung umfassend ein Handhabungsgerät (10), in dem Kräfte- und Momentensensoren integriert sind, ein erstes Tastelement (16), in dem ein erster Sensor integriert ist, und eine Auswerteeinheit (24) zum Überprüfen einer Funktionen auslösenden Fläche (17) durch Druckbeaufschlagung von zumindest einem Teilbereich, vorzugsweise mehreren Teilbereichen der Fläche, insbesondere zur Überprüfung eines Touchscreens, wobei nach die Funktion auslösender Druckbeaufschlagung die Fläche bzw. der druckbeaufschlagte Teilbereich haptisch erfassbar reagiert, wobei von dem Handhabungsgerät (10) mit integrierten Kraft- und Momentensensoren das erste Tastelement (16) mit dem integrierten ersten Sensor (48) ausgeht, über das mittels des Handhabungsgerätes die Fläche druckbeaufschlagbar ist, wobei in dem ersten Tastelement (16) zumindest ein Vibrationssensor (48) als der erste Sensor integriert ist, der seinerseits gegenüber dem Handhabungsgerät (10) schwingungsmäßig entkoppelt ist, und der erste Sensor mit der Auswerteeinheit (24) verbunden ist, wobei die Auswerteeinheit ausgestattet ist, Signale des ersten Sensors, die durch durch Druckbeaufschlagung ausgelöste Force-Feedback-Funktionen erzeugt sind, bezüglich Amplitude und/oder Frequenz zu analysieren und zu bewerten, wobei über die in dem Handhabungsgerät integrierten Kräfte- und Momentensensoren über das Tastelement (16, 18) auf die Fläche (17) einwirkende Kraft regelbar ist.

16. Anordnung nach Anspruch 15,
**dadurch gekennzeichnet,**
**dass** dem ersten Tastelement (16) ein zweites Tastelement (18) zugeordnet ist, das mittels des Handhabungsgerätes (10) zusammen mit dem ersten Tastelement und/oder zu dem ersten Tastelement verstellbar ist wobei vorzugsweise in dem ersten bzw. zweiten Tastelement (16, 18) ein Drucksensor (50) als zweiter Sensor integriert ist, und/oder dass dem ersten Tastelement (16) ein die Fläche (17) oder zumindest einen Teilbereich dieser optisch erfassbarer weiterer Sensor (72) zugeordnet ist.

17. Anordnung nach zumindest einem der Ansprüche 15 und/oder 16,
**dadurch gekennzeichnet,**
**dass** der erste Sensor (48) in einem aus Kunststoff bestehenden Körper (40) eingegossen ist, dessen flächenseitig auszurichtender Bereich kuppenartig ausgebildet ist.

## Claims

1. Method for checking a function-triggering surface (17) by applying pressure to at least one partial area, preferably to several partial areas of said surface, in particular for checking a touch screen, where after pressure application triggering the function the surface or that partial area subjected to pressure reacts in haptically registrable manner, where the at least one partial area is subjected to pressure by a first feeler element (16), in which is integrated a first sensor (48), by means of a handling device (10) having integrated force and momentum sensors, where an introduction of force of the first feeler element (16) into the surface (17) is regulated by the force and momentum sensors integrated in the handling device (10), said first feeler element having an intermediate element (56) decoupling a body consisting of plastic from the handling device (10) in respect of vibration, where force feedback functions of the surface (17) triggered by the pressure application are registered by the first sensor (48) integrated in the feeler element in the form of a vibration sensor, and amplitude and/or frequency of force feedback signals is/are analysed and assessed.

2. Method according to claim 1,
wherein
a 3D vibration sensor, in particular a three-axis acceleration sensor, is used as the first sensor (48), and/or the first sensor (48) is integrated, such as embedded, in a body consisting of plastic, in particular of a thermoplastic such as polyvinylidene fluoride, and having a cylindrical shape with an area tapering towards its free end and having a force-applying end face.

3. Method according to claim 1 or 2,
wherein
a second sensor (50) is integrated in the feeler element (16, 18) using which the force or pressure acting on the surface (17) or on the partial area via das feeler element is measured.

4. Method according to at least one of the preceding claims,
wherein
the first feeler element (16) is assigned a second feeler element (18) movable both with it and relative to it and by means of which the surface (17) is both subjectable to force at some points and is movable, while touching the surface, along the latter and relative to the first feeler element, the second feeler element (18) preferably being designated matching the first feeler element (16).

5. Method according to at least one of the preceding claims,
wherein
the first feeler element (16) is moved by means of the handling device (10) such that the partial area to be touched is subjected to force in the direction of its normal.

6. Method according to at least one of the preceding claims,
wherein
the intermediate element (56) is a rubber element.

7. Method according to at least one of the preceding claims,
wherein
by moving the first feeler element (16) and the second feeler element (18) relative to one another the finger movements touching the surface (17) are simulated.

8. Method according to at least one of the preceding claims,
wherein
the surface (17) is registered by a third sensor designated as an optical sensor (72) such as a camera and which is moved preferably with the first feeler element (16).

9. Method according to at least one of the preceding claims,
wherein
dimensions and/or the geometrical course of the surface are measured by means of preferably the first feeler element (16).

10. Method according to claim 4,
wherein
the introduction of force of the second feeler element (18) into the surface (17) is regulated by force and/or momentum sensors integrated in the handling device (10), and/or the triggering force for a force feedback function of the surface (17) is determined by means of force and/or momentum sensors integrated in the handling device (10).

11. Method according to claim 4,
wherein
the relative movement between the first and the second feeler elements (16, 18) is overlaid by rotational and/or translational movements of the handling device (10).

12. Method according to at least one of the preceding claims,
wherein
dimensions and/or the geometrical course of the surface (17) are measured without touching, in particular a measurement by means of an optical sensor or by triggering of a force feedback reaction being effected by touching or proximity of at least one of the feeler elements (16, 18) and the coordinates of the at least one feeler element determined during triggering of the force-feedback reaction being registered.

13. Method according to at least one of the preceding claims,
wherein
during movement of the feeler element (16, 18) at least touching the surface (17) a triggered function displayed on the surface is optically registered, the registered or determined function preferably being assessed.

14. Method according to at least claim 13,
wherein
at least one of the parameters from the group of pressure application on the at least one partial area, speed of the feeler element (16, 18) moved on the surface, acceleration of the feeler element moved on the surface (17), and position of the feeler element on the surface, is determined and evaluated in real time.

15. Arrangement comprising a handling device (10) in which force and momentum sensors are integrated, a first feeler element (16) in which is integrated a first sensor, and an evaluation unit (24) for checking a function-triggering surface (17) by applying pressure to at least one partial area, preferably to several partial areas of said surface, in particular for checking a touch screen, where after pressure application triggering the function the surface or the partial area subjected to pressure reacts in haptically registrable manner, where the first feeler element (16) with the integrated first sensor (48) extends from the handling device (10) with integrated force and momentum sensors, by which first feeler element the surface is subjectable to pressure by means of the handling device, where at least one vibration sensor (48) is integrated as the first sensor in the first feeler element (16) and is in turn decoupled from the handling device (10) in respect of vibration, and the first sensor is connected to the evaluation unit (24), which is equipped to analyse and assess signals of the first sensor generated by force feedback functions triggered by pressure application in respect of amplitude and/or frequency, where the force acting on the surface (17) via the feeler element (16, 18) is regulatable by the force and momentum sensors integrated in the handling device.

16. Arrangement according to claim 15,
wherein
the first feeler element (16) is assigned a second feeler element (18) which is movable by means of the handling device (10) together with the first feeler element and/or relative to the first feeler element, a pressure sensor (50) preferably being integrated as a second sensor in the first or second feeler element (16, 18), and/or the first feeler element (16) is assigned a further sensor (72) optically registering the surface (17) or at least one partial area thereof.

17. Arrangement according to at least one of claims 15 and/or 16,
wherein
the first sensor (48) is embedded in a body (40) consisting of plastic whose area to be aligned on the surface side is designed fingertip-like.

## Revendications

1. Procédé pour tester une surface déclenchant des fonctions (17) en appliquant une pression sur au moins une zone partielle, de préférence sur plusieurs zones partielles de la surface, notamment pour tester un écran tactile, sachant qu'après l'application de la pression déclenchant la fonction, la surface ou la zone partielle où est appliquée la pression réagit de manière perceptible au toucher, sachant que la pression sur ladite au moins une zone partielle est appliquée par un premier élément palpeur (16) dans lequel est intégré un premier capteur (48), au moyen d'un manipulateur (10) avec des capteurs de force et de couple intégrés, sachant que les capteurs de force et de couple intégrés dans le manipulateur (10) régulent l'introduction par le premier élément palpeur (16) d'une force dans la surface (17), lequel premier palpeur présente un élément intermédiaire (56) provoquant un découplage vibratoire entre un corps constitué de plastique et le manipulateur (10), sachant que les fonctions de retour d'effort de la surface (17) déclenchées par l'application de la pression sont acquises par le premier capteur (48) intégré dans l'élément palpeur et conçu sous forme de capteur de vibrations, et que l'amplitude et/ou la fréquence des signaux de retour d'effort sont analysées et évaluées.

2. Procédé selon la revendication 1,
**caractérisé en ce**
**qu'**est utilisé comme premier capteur (48) un capteur de vibrations 3D, notamment un accéléromètre trois axes, et/ou que le premier capteur (48) est intégré, par exemple coulé, dans un corps constitué de plastique, notamment de matière thermoplastique, telle que du polyfluorure de vinylidène, qui présente une forme cylindrique avec une zone se rétrécissant en direction de son extrémité libre, avec une surface frontale destinée à appliquer une pression.

3. Procédé selon la revendication 1 ou 2,
**caractérisé en ce**
**qu'**est intégré dans l'élément palpeur (16, 18) un second capteur (50) par le biais duquel la force ou pression s'exerçant sur la surface (17) ou la zone partielle est mesurée par l'élément palpeur.

4. Procédé selon au moins une des revendications précédentes,
**caractérisé en ce**
**qu'**est associé au premier élément palpeur (16) un second élément palpeur (18) déplaçable aussi bien avec celui-ci que vers celui-ci, au moyen duquel la surface (17) peut recevoir ponctuellement une pression mais qui est aussi déplaçable le long de la surface et vers le premier élément palpeur en appuyant sur celle-ci, sachant que de préférence, le second élément palpeur (18) est construit conformément au premier élément palpeur (16).

5. Procédé selon au moins une des revendications précédentes,
**caractérisé en ce**
**que** le premier élément palpeur (16) est déplacé au moyen du manipulateur (10) de sorte que la force est appliquée sur la zone partielle à toucher en direction de sa normale.

6. Procédé selon au moins une des revendications précédentes,
**caractérisé en ce**
**que** l'élément intermédiaire (56) est un élément en caoutchouc.

7. Procédé selon au moins une des revendications précédentes,
**caractérisé en ce**
**que** des gestes de doigts touchant la surface (17) sont simulés par le déplacement du premier élément palpeur (16) et du second élément palpeur (18) l'un par rapport à l'autre.

8. Procédé selon au moins une des revendications précédentes,
**caractérisé en ce**
**que** la surface (17) est acquise par le biais d'un troisième capteur conçu sous forme de capteur optique (72) tel qu'une caméra, qui est déplacé de préférence avec le premier élément palpeur (16).

9. Procédé selon au moins une des revendications précédentes,
**caractérisé en ce**
**que** les dimensions et/ou la forme géométrique de la surface sont mesurées de préférence au moyen du premier élément palpeur (16).

10. Procédé selon la revendication 4,
**caractérisé en ce**
**que** l'introduction de force dans la surface (17) par le second élément palpeur (18) est régulée par les capteurs de force et/ou de couple intégrés au manipulateur (10), et/ou que la force de déclenchement pour une fonction de retour d'effort de la surface (17) est déterminée au moyen des capteurs de force et/ou de couple qui sont intégrés au manipulateur (10).

11. Procédé selon la revendication 4,
**caractérisé en ce**
**que** les mouvements de rotation et/ou de translation du manipulateur (10) se superposent au mouvement relatif entre le premier et le second élément palpeur (16, 18).

12. Procédé selon au moins une des revendications précédentes,
**caractérisé en ce**
**que** les dimensions et/ou la géométrie de la surface (17) sont mesurées sans contact, sachant que notamment, une mesure est acquise au moyen d'un capteur optique ou par le déclenchement d'une réaction de retour d'effort suite au contact ou à l'approche d'au moins un des éléments palpeurs (16, 18) et que les coordonnées dudit au moins un élément palpeur, déterminées lors du déclenchement de la réaction de retour d'effort sont acquises.

13. Procédé selon au moins une des revendications précédentes,
**caractérisé en ce**
**que** lors du mouvement de l'élément palpeur (16, 18) touchant au moins la surface (17), une fonction déclenchée, affichée sur la surface est acquise de manière optique, sachant que de préférence, la fonction acquise ou déterminée est évaluée.

14. Procédé selon au moins la revendication 13,
**caractérisé en ce**
**qu'**au moins un des paramètres appartenant à la catégorie application de pression sur au moins une zone partielle, vitesse de l'élément palpeur (16, 18) déplacé sur la surface, accélération de l'élément palpeur déplacé sur la surface (17), position de l'élément palpeur sur la surface est déterminé et évalué en temps réel.

15. Système comprenant un manipulateur (10) dans lequel sont intégrés des capteurs de force et de couple, un premier élément palpeur (16) dans lequel est intégré un premier capteur, et une unité d'évaluation (24) pour tester une surface (17) déclenchant des fonctions par application d'une pression sur au moins une zone partielle, de préférence sur plusieurs zones partielles de la surface, notamment pour tester un écran tactile, sachant qu'après l'application de la pression déclenchant la fonction, la surface ou la zone partielle sur laquelle est appliquée la pression réagit de manière perceptible au toucher, sachant que le premier élément palpeur (16) avec le premier capteur intégré (48) part du manipulateur (10) avec des capteurs de force et de couple intégrés, par le biais duquel premier élément palpeur une pression est applicable sur la surface au moyen du manipulateur, sachant qu'au moins un capteur de vibrations (48) est intégré dans le premier élément palpeur (16), sous la forme d'un premier capteur qui est découplé du manipulateur (10) sur le plan vibratoire, et que le premier capteur est relié à l'unité d'évaluation (24), sachant que l'unité d'évaluation est équipée pour analyser et évaluer l'amplitude et/ou la fréquence des signaux du premier capteur, qui sont produits par les fonctions de retour d'effort déclenchées par l'application d'une pression, sachant que la force s'exerçant sur la surface (17) par le biais de l'élément palpeur (16, 18) est régulable par les capteurs de force et de couple intégrés au manipulateur.

16. Système selon la revendication 15,
**caractérisé en ce**
**qu'**est attribué au premier élément palpeur (16) un second élément palpeur (18) qui est déplaçable avec le premier élément palpeur et/ou vers le premier élément palpeur au moyen du manipulateur (10), sachant que de préférence, un capteur de pression (50) est intégré sous forme de second capteur, dans le premier ou le second élément palpeur (16, 18), et/ou qu'un autre capteur (72) pouvant acquérir de manière optique la surface (17) ou au moins une zone partielle de celle-ci est associé au premier élément palpeur (16).

17. Système selon au moins une des revendications 15 et/ou 16,
**caractérisé en ce**
**que** le premier capteur (48) est coulé dans un corps (40) constitué de plastique dont la zone à orienter du côté de la surface est de forme arrondie.
